# EUROPÄISCHE PATENTANMELDUNG

(11) **EP 3 960 490 A1**
(43) Veröffentlichungstag der Anmeldung: **02.03.2022**
(21) Anmeldenummer: 21192852.8
(22) Anmeldetag: 24.08.2021
(51) Int. Cl.: B60B 37/06, B61F 15/12

(54) **RADSATZLAGER, RADSATZ UND FAHRWERK FÜR FAHRZEUGE**

(30) Priorität: 28.08.2020 AT 80052020
(71) Anmelder: Siemens Mobility Austria GmbH, 1210 Wien (AT)
(72) Erfinder: Thomann, Karl-Heinz, 8250 Schachen bei Vorau (AT)
(74) Vertreter: Deffner, Rolf

(57) **Zusammenfassung**

Die Erfindung bezieht sich auf ein Radsatzlager für Fahrzeuge, insbesondere für Schienenfahrzeuge, mit zumindest einem Lagerinnenring (7), zumindest einem Lageraußenring (8), zumindest einer Lagerkörperanordnung (9) und einer Lagerlängsachse (12), wobei die zumindest eine Lagerkörperanordnung (9) dem zumindest einen Lagerinnenring (7) und dem zumindest einen Lageraußenring (8) zwischengeordnet ist.

Um vorteilhafte Konstruktionsbedingungen zu schaffen, wird vorgeschlagen, dass der zumindest eine Lagerinnenring (7) stirnseitig zumindest eine bezüglich der Lagerlängsachse (12) exzentrische erste Lagerbohrung (14) aufweist, über welche ein erstes Rad (3) und eine Radsatzwelle (22) miteinander verbindbar sind.

Dadurch wird eine stirnseitige Verbindungsmöglichkeit des Radsatzlagers mit einer Fahrzeugkomponente erreicht.

## Beschreibung

Die Erfindung betrifft ein Radsatzlager für Fahrzeuge, insbesondere für Schienenfahrzeuge, mit zumindest einem Lagerinnenring, zumindest einem Lageraußenring, zumindest einer Lagerkörperanordnung und einer Lagerlängsachse, wobei die zumindest eine Lagerkörperanordnung dem zumindest einen Lagerinnenring und dem zumindest einen Lageraußenring zwischengeordnet ist.

Es ist üblich, Radsatzlager über Lagerinnenringe auf Radsätze, insbesondere auf Radsatzwellen aufzuziehen und mit den Radsätzen zu verbinden, wobei häufig Pressverbindungen vorgesehen sind.

Bei Radsatzwellen, Radsatzwellenabschnitten oder Wellenstummeln von Losradsätzen etc. mit großen Durchmessern (z.B. bei Hohlwellen von Leichtbauradsätzen) müssen auch die Lagerinnenringe große Durchmesser aufweisen, was, bezogen auf zu erwartende Belastungen der Radsatzlager, eine Überdimensionierung der Radsatzlager bedeuten kann.

Aus dem Stand der Technik ist beispielsweise die EP 2 833 011 A1 bekannt, in welcher eine Radsatzlageranordnung für ein Schienenfahrzeug gezeigt ist. Lagerinnenringe sind auf eine Welle aufgezogen, Lageraußenringe sind mit einem Radsatzlagergehäuse verbunden. Ein Lagerinnenring ist über eine Schulter der Welle und einen Stützring axial abgestützt. Zwischen dem Stützring und dem Radsatzlagergehäuse ist eine Dichtanordnung vorgesehen.

Weiterhin offenbart die US 2006/0140525 A1 einen Lagersockel für eine Dampfturbine, welcher stirnseitig eine Ölversorgungsbohrung aufweist.

Ferner ist in der WO 2019/002343 A1 ein Radsatz für Fahrzeuge, insbesondere für Schienenfahrzeuge gezeigt, welcher zumindest drei Segmente umfasst, welche stoffschlüssig miteinander verbunden sind. Zumindest ein Segment ist als Hohlwellensegment ausgebildet.

Die genannten Ansätze weisen in ihren bekannten Formen den Nachteil auf, dass sich der gezeigte Lagersockel kaum für Radsätze von Schienenfahrzeugen eignet, dass die gezeigte Radsatzlageranordnung zur Verbindung mit einem Radsatz eines Schienenfahrzeugs auf eine Radsatzwelle aufgezogen werden muss und dass der gezeigte, segmentierte Radsatz im Hinblick auf aufzupressende Radsatzlager ausgebildet ist.

Der Erfindung liegt die Aufgabe zugrunde, ein gegenüber dem Stand der Technik weiterentwickeltes, auch für große Wellendurchmesser geeignetes Radsatzlager anzugeben, dessen Durchmesser weitgehend frei, entsprechend der zu erwartenden Belastungen ausgelegt werden kann.

Erfindungsgemäß wird diese Aufgabe gelöst mit einem Radsatzlager der eingangs genannten Art, bei dem der zumindest eine Lagerinnenring stirnseitig zumindest eine bezüglich der Lagerlängsachse exzentrische erste Lagerbohrung aufweist, über welche ein erstes Rad und eine Radsatzwelle miteinander verbindbar sind.

Dadurch kann das Radsatzlager stirnseitig mit Radsatzkomponenten verbunden werden, wodurch geometrische Eigenschaften des Radsatzlagers belastungsgerecht dimensioniert sein können. Bei einer Dimensionierung des Radsatzlagers muss ein Wellendurchmesser der Radsatzwelle nicht berücksichtigt werden bzw. können Durchmesser des Radsatzlagers unabhängig von dem Wellendurchmesser gewählt werden. Beispielsweise kann es günstig sein, wenn ein Innendurchmesser des zumindest einen Radsatzlagers kleiner ist als ein Außendurchmesser der Radsatzwelle.

Es ist nicht erforderlich, dass das Radsatzlager beispielsweise auf die Radsatzwelle aufgepresst wird.

Eine vorteilhafte Ausgestaltung eines Radsatzes erhält man, wenn das zumindest eine Radsatzlager mittels einer in zumindest einer ersten Lagerbohrung geführten ersten Schraube mit einer ersten Radsatzkomponente und einer zweiten Radsatzkomponente verbunden ist, wobei die erste Radsatzkomponente als erstes Rad ausgebildet ist und die erste Schraube in einer als erste Radbohrung ausgebildeten, stirnseitigen ersten Radsatzkomponentenbohrung angeordnet ist, und wobei die zweite Radsatzkomponente als Radsatzwelle ausgebildet ist und die erste Schraube in einer als erste Radsatzwellenbohrung ausgebildeten, stirnseitigen zweiten Radsatzkomponentenbohrung angeordnet ist, wobei das erste Rad und die Radsatzwelle mittels der ersten Schraube, welche durch die zumindest erste Lagerbohrung hindurchgeführt ist, miteinander verbunden sind.

Durch diese Maßnahme sind keine Presssitze zwischen dem Radsatzlager, der ersten Radsatzkomponente und der zweiten Radsatzkomponente erforderlich. Zur Zentrierung des Radsatzlagers und zur Erfüllung vorgegebener Rundlauftoleranzen kann beispielsweise ein Ansatz oder eine Schulter auf der ersten Radsatzkomponente und/oder der zweiten Radsatzkomponente vorgesehen sein.

Weiterhin wird durch diese Maßnahme ein modularer Radsatz ermöglicht.

Im Zusammenhang mit einer Ermöglichung eines modularen Radsatzes ist es weiterhin günstig, wenn zumindest eine Radsatzlager und zumindest die erste Radsatzkomponente einander im Wesentlichen stirnseitig kontaktierend angeordnet sind.

Ein Fahrwerk mit innengelagerten Radsätzen wird ermöglicht, wenn das zumindest eine Radsatzlager dem ersten Rad und der Radsatzwelle zwischengeordnet ist.

Ein Fahrwerk mit außengelagerten Radsätzen kann gebildet werden, wenn das zumindest eine Radsatzlager außerhalb eines von dem ersten Rad und einem zweiten Rad eingegrenzten Bereichs angeordnet ist.

Es ist günstig, wenn die Radsatzwelle als Hohlwelle oder als Rohr ausgebildet ist oder zumindest einen Hohlraum aufweist. Durch diese Maßnahme wird eine Massenreduktion der Radsatzwelle erzielt. Es wird ein Leichtbauradsatz mit belastungsgerecht dimensioniertem Radsatzlager ermöglicht. Die Hohlwelle, das Rohr oder der Hohlraum kann mit einem Fluid (z.B. Druckluft) gefüllt sein. Sind mit dem Radsatz entsprechende Sensoren (z.B. Drucksensoren, Temperatursensoren und/oder Anemometer etc.) verbunden, so kann beispielsweise ein Entweichen von Druckluft aufgrund von Schäden oder Fehlern der Radsatzwelle (z.B. ein Durchriss) detektiert werden.

Eine vorteilhafte Ausgestaltung erhält man weiterhin, wenn die Radsatzwelle eine Mehrzahl an Radsatzwellenteilen aufweist.

Dadurch wird ein modularer Radsatz verwirklicht, bei welchem die einzelnen Radsatzwellenteile als Hohlwellen-, Rohr- oder Vollwellensegmente mit Hohlräumen oder ohne Hohlräume ausgebildet sein können. Es ist auch möglich, dass die Radsatzwellenteile Zwischensegmente wie beispielsweise Dichtringe, Adapterscheiben, Naben für Bremsscheiben, Zahnscheiben etc. umfassen.

Es ist ferner hilfreich, wenn die Radsatzwelle oder zumindest ein erstes Radsatzwellenteil an zumindest einem Ende verstärkt ausgeführt ist.

Durch diese Maßnahme werden besonders stark belastete Bereiche des ersten Radsatzwellenteils (z.B. aufgrund einer Krafteinleitung von dem Radsatzlager in das erste Radsatzwellenteil) vor übermäßiger Beanspruchung geschützt. Nachfolgend wird die Erfindung anhand von Ausführungsbeispielen näher erläutert.

Es zeigen beispielhaft:
- Fig. 1:: Einen Seitenriss einer beispielhaften ersten Ausführungsvariante eines erfindungsgemäßen, innengelagerten Radsatzes eines Fahrwerks eines Schienenfahrzeugs mit erfindungsgemäßen Radsatzlagern, und
- Fig. 2:: Einen Seitenriss einer beispielhaften zweiten Ausführungsvariante eines erfindungsgemäßen, außengelagerten Radsatzes eines Fahrwerks eines Schienenfahrzeugs mit erfindungsgemäßen Radsatzlagern.

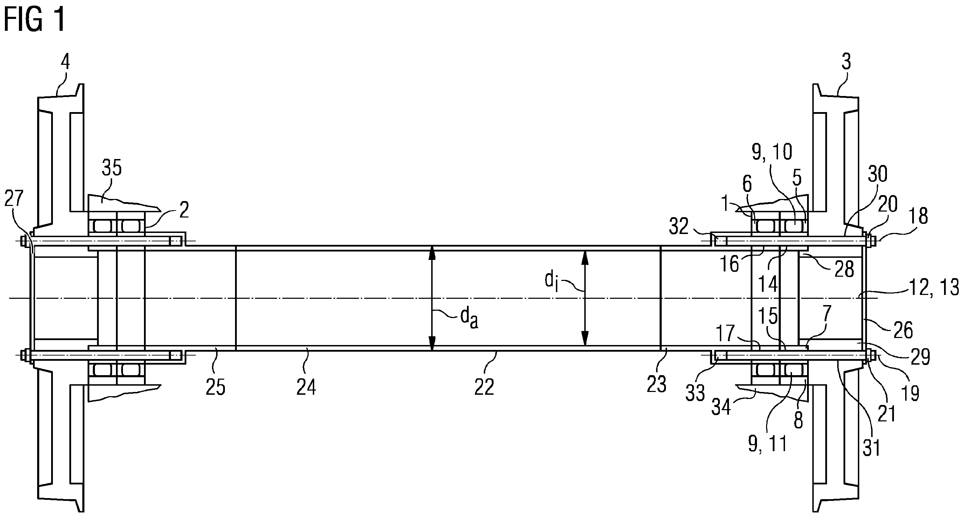

Ein in Fig. 1 dargestellter Seitenriss einer beispielhaften ersten Ausführungsvariante eines erfindungsgemäßen Radsatzes ist Teil eines Fahrwerks eines Schienenfahrzeugs.

Bei dem Radsatz handelt es sich um einen innengelagerten Radsatz, d.h. der Radsatz ist über ein erfindungsgemäßes erstes Radsatzlager 1 und ein erfindungsgemäßes zweites Radsatzlager 2, welche in einem Bereich zwischen einem ersten Rad 3 und einem zweiten Rad 4 des Radsatzes angeordnet sind, mit einem in Fig. 1 nicht gezeigten Fahrwerksrahmen des Fahrwerks verbunden.

Erfindungsgemäß ist es jedoch auch vorstellbar, dass das erste Radsatzlager 1 und das zweite Radsatzlager 2 außerhalb eines von dem ersten Rad 3 und dem zweiten Rad 4 eingegrenzten Bereichs angeordnet sind, wodurch eine Außenlagerung des Radsatzes erreicht wird.

Das erste Radsatzlager 1 weist ein erstes Lagerelement 5 und ein zweites Lagerelement 6 auf. Das zweite Lagerelement 6 gleicht konstruktiv und funktionell dem ersten Lagerelement 5. Das zweite Radsatzlager 2 gleicht konstruktiv und funktionell dem ersten Radsatzlager 1.

Das erste Lagerelement 5 weist einen Lagerinnenring 7, einen Lageraußenring 8 sowie eine Lagerkörperanordnung 9 auf. Erfindungsgemäß ist es auch denkbar, dass das erste Lagerelement 5 und das zweite Lagerelement 6 einen gemeinsamen Innenring oder einen gemeinsamen Außenring aufweisen.

Erfindungsgemäß ist es ferner möglich, dass auf das zweite Lagerelement 6 verzichtet wird bzw. dass je Radsatzlager nur ein Lagerelement vorgesehen ist.

Die Lagerkörperanordnung 9 umfasst einen zylindrischen ersten Wälzkörper 10, einen zylindrischen zweiten Wälzkörper 11 sowie in Fig. 1 nicht sichtbare weitere zylindrische Wälzkörper, welche dem Lagerinnenring 7 und dem Lageraußenring 8 zwischengeordnet sind.

Erfindungsgemäß ist es auch vorstellbar, dass der erste Wälzkörper 10, der zweite Wälzkörper 11 und die weiteren Wälzkörper beispielsweise konisch ausgebildet sind.

Eine Lagerlängsachse 12, welche einer Radsatzlängsachse 13 entspricht, bildet das Zentrum des ersten Lagerelements 5 und des zweiten Lagerelements 6. Stirnseitig und bezüglich der Lagerlängsachse 12 exzentrisch sind in dem Lagerinnenring 7 eine erste Lagerbohrung 14 mit einer ersten Bohrungslängsachse 18, eine zweite Lagerbohrung 15 mit einer zweiten Bohrungslängsachse 19 sowie in Fig. 1 nicht sichtbare weitere Lagerbohrungen vorgesehen, welche als Durchgangsbohrungen ausgebildet sind. Die erste Bohrungslängsachse 18 und die zweite Bohrungslängsachse 19 sind parallel zu der Lagerlängsachse 12 angeordnet.

Das zweite Lagerelement 6 weist, entsprechend dem ersten Lagerelement 5, stirnseitig und exzentrisch eine dritte Lagerbohrung 16, eine vierte Lagerbohrung 17 sowie in Fig. 1 nicht sichtbare weitere Lagerbohrungen auf, welche ebenfalls als Durchgangsbohrungen ausgeführt sind.

In der ersten Lagerbohrung 14 sowie in der dritten Lagerbohrung 16 ist eine erste Schraube 20 geführt, in der zweiten Lagerbohrung 15 sowie in der vierten Lagerbohrung 17 eine zweite Schraube 21. In den weiteren Lagerbohrungen sind in Fig. 1 nicht sichtbare weitere Schrauben geführt.

Über die erste Schraube 20, die zweite Schraube 21 und die weiteren Schrauben ist das erste Radsatzlager 1 mit dem ersten Rad 3, d.h. mit einer ersten Radsatzkomponente, und mit einer Radsatzwelle 22, d.h. mit einer zweiten Radsatzkomponente, des Radsatzes verbunden, wodurch das erste Rad 3 und die Radsatzwelle 22 miteinander gekoppelt sind.

Die Radsatzwelle 22 weist ein erstes Radsatzwellenteil 23, ein zweites Radsatzwellenteil 24 sowie ein drittes Radsatzwellenteil 25 auf, welche als Hohlwellen bzw. rohrförmig ausgebildet und miteinander verschweißt sind.

Ein aus der Radsatzwelle 22, dem ersten Radsatzlager 1, dem zweiten Radsatzlager 2, dem ersten Rad 3 und dem zweiten Rad 4 gebildeter Innenraum ist an Stirnseiten des ersten Rads 3 und des zweiten Rads 4 mittels eines ersten Deckels 26 und eines zweiten Deckels 27 dicht verschlossen.

Der Lagerinnenring 7 des ersten Radsatzlagers 1 und ein Innenring des zweiten Radsatzlagers 2 sind als Radsatz-Hohlabschnitte ausgebildet, welche die Radsatzwelle 22 verlängern.

Erfindungsgemäß ist es jedoch auch vorstellbar, dass die Radsatzwelle 22 als Vollwelle mit Hohlräumen oder ohne Hohlräume ausgeführt ist.

Weiterhin ist es denkbar, dass das erste Radsatzwellenteil 23, das zweite Radsatzwellenteil 24 und das dritte Radsatzwellenteil 25 lösbar, z.B. mittels Schraubenverbindungen, miteinander gekoppelt sind.

Es ist ferner möglich, dass der Radsatz weitere Radsatzwellenteile aufweist, die beispielsweise als Zwischensegmente wie Dichtringe, Adapterscheiben, Naben für Bremsscheiben, Zahnscheiben etc. ausgebildet sind.

Der Innenraum ist mit Druckluft gefüllt und es sind mit dem Radsatz ein Drucksensor sowie ein Temperatursensor, welche in Fig. 1 nicht gezeigt sind, verbunden. Mittels des Drucksensors und des Temperatursensors wird ein Entweichen von Druckluft aus dem Innenraum (z.B. aufgrund eines Durchrisses der Radsatzwelle 22, eines Aufklaffens einer Verbindung zwischen dem ersten Radsatzlager 1 und der Radsatzwelle 22 etc.) detektiert, wobei mittels des Temperatursensors eine Temperaturabhängigkeit eines Drucks der Druckluft kompensiert wird. Auf Grundlage einer derartigen Detektion können Schäden und Fehler des Radsatzes festgestellt werden (z.B. mittels Auslesens und Auswertens entsprechender Sensorsignale durch Wartungspersonal).

Das erste Radsatzlager 1 ist dem ersten Rad 3 und dem ersten Radsatzwellenteil 23 zwischengeordnet und kontaktiert das erste Rad 3 und das erste Radsatzwellenteil 23 im Wesentlichen stirnseitig. Das erste Rad 3 weist einen zylindrischen Ansatz 28 auf, auf welchem das erste Radsatzlager 1 zur Erfüllung von Rundlauftoleranzen zentriert ist.

Erfindungsgemäß ist es jedoch auch denkbar, dass nicht das erste Rad 3, sondern das erste Radsatzwellenteil 23 den Ansatz 28 aufweist und dass das erste Radsatzlager 1 darauf zentriert ist.

Das erste Radsatzlager 1 weist einen Innendurchmesser dᵢ auf, welcher kleiner ist als ein Außendurchmesser dₐ der Radsatzwelle 22.

Die erste Schraube 20, die zweite Schraube 21 und die weiteren Schrauben sind als Sechskantschrauben ausgebildet und durch das erste Lagerelement 5 und das zweite Lagerelement 6 hindurchgeführt. Schraubenköpfe der ersten Schraube 20, der zweiten Schraube 21 und der weiteren Schrauben kontaktieren stirnseitig eine Radnabe 29 des ersten Rads 3. Die Radnabe 29 weist stirnseitig eine erste Radbohrung 30, in welcher die erste Schraube 20 geführt ist, eine zweite Radbohrung 31, in welcher die zweite Schraube 21 geführt ist, sowie in Fig. 1 nicht sichtbare weitere Radbohrungen, in welchen die weiteren Schrauben geführt sind, auf. Die erste Radbohrung 30, die zweite Radbohrung 31 und die weiteren Radbohrungen, wobei es sich um erste Radsatzkomponentenbohrungen handelt, sind als Durchgangsbohrungen ausgebildet und in Bezug auf die Radsatzlängsachse 13 exzentrisch sowie parallel zu der Radsatzlängsachse 13 angeordnet.

Das erste Radsatzwellenteil 23 weist stirnseitig eine erste Radsatzwellenbohrung 32, in welcher die erste Schraube 20 geführt ist, eine zweite Radsatzwellenbohrung 33, in welcher die zweite Schraube 21 geführt ist, sowie in Fig. 1 nicht sichtbare weitere Radsatzwellenbohrungen, in welchen die weiteren Schrauben geführt sind, auf. Die erste Radsatzwellenbohrung 32, die zweite Radsatzwellenbohrung 33 und die weiteren Radsatzwellenbohrungen, wobei es sich um zweite Radsatzkomponentenbohrungen handelt, sind als Sacklochbohrungen ausgeführt und in Bezug auf die Radsatzlängsachse 13 exzentrisch sowie parallel zu der Radsatzlängsachse 13 angeordnet.

Im Bereich der ersten Radsatzwellenbohrung 32, der zweiten Radsatzwellenbohrung 33 und der weiteren Radsatzwellenbohrungen, d.h. im Bereich eines Endes des ersten Radsatzwellenteils 23, ist das erste Radsatzwellenteil 23 verstärkt, d.h. verdickt bzw. mit größerer Wandstärke, ausgebildet.

Das zweite Radsatzlager 2 ist im Hinblick auf dessen Verbindungstechnik mit dem zweiten Rad 4 und dem dritten Radsatzwellenteil 25 gleich ausgeführt wie das erste Radsatzlager 1, das erste Rad 3 und das erste Radsatzwellenteil 23.

Das erste Radsatzlager 1 ist in einem ersten Radsatzlagergehäuse 34 angeordnet und damit verbunden. Das zweite Radsatzlager 2 ist in einem zweiten Radsatzlagergehäuse 35 angeordnet und damit verbunden. Über das erste Radsatzlagergehäuse 34 und das zweite Radsatzlagergehäuse 35 ist der Radsatz mit dem Fahrwerksrahmen gekoppelt.

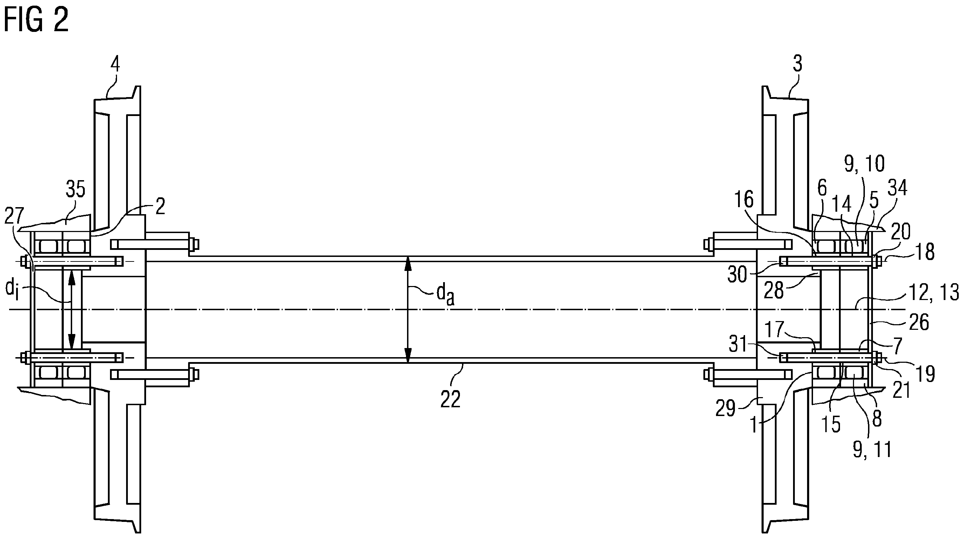

In Fig. 2 ist ein Seitenriss einer beispielhaften zweiten Ausführungsvariante eines erfindungsgemäßen Radsatzes, welcher Teil eines Fahrwerks eines Schienenfahrzeugs ist, gezeigt.

Bei dem Radsatz handelt es sich um einen außengelagerten Radsatz, d.h. der Radsatz ist über ein erfindungsgemäßes erstes Radsatzlager 1 und ein erfindungsgemäßes zweites Radsatzlager 2, welche außerhalb eines von einem ersten Rad 3 und einem zweiten Rad 4 des Radsatzes eingegrenzten Bereichs angeordnet sind, über ein mit dem ersten Radsatzlager 1 verbundenes erstes Radsatzlagergehäuse 34 sowie ein mit dem zweiten Radsatzlager 2 verbundenes zweites Radsatzlagergehäuse 35 mit einem in Fig. 2 nicht gezeigten Fahrwerksrahmen des Fahrwerks gekoppelt.

Das erste Radsatzlager 1 weist ein erstes Lagerelement 5 und ein zweites Lagerelement 6 auf. In dem ersten Lagerelement 5 sind eine erste Lagerbohrung 14, eine zweite Lagerbohrung 15 sowie in Fig. 2 nicht sichtbare weitere Lagerbohrungen vorgesehen, in dem zweiten Lagerelement 6 eine dritte Lagerbohrung 16, eine vierte Lagerbohrung 17 sowie in Fig. 2 nicht sichtbare weitere Lagerbohrungen.

Die erste Lagerbohrung 14, die zweite Lagerbohrung 15, die dritte Lagerbohrung 16, die vierte Lagerbohrung 17 sowie die weiteren Lagerbohrungen sind als Durchgangsbohrungen ausgebildet sowie stirnseitig und in Bezug auf eine Lagerlängsachse 12 exzentrisch angeordnet.

Das zweite Radsatzlager 2 gleicht konstruktiv und funktionell dem ersten Radsatzlager 1.

Das erste Radsatzlager 1 und das zweite Radsatzlager 2 entsprechen im Hinblick auf deren konstruktive und funktionelle Eigenschaften jenen Radsatzlagern, welche in Fig. 1 dargestellt sind.

Für die Radsatzlager werden daher in Fig. 2 gleiche Bezugszeichen wie in Fig. 1 verwendet.

Im Unterschied zu Fig. 1 ist das erste Radsatzlager 1 von Fig. 2 über eine Außenseite mit dem ersten Rad 3, d.h. mit einer Radsatzkomponente, verbunden. Das erste Radsatzlager 1 ist auf einem Ansatz 28 des ersten Rads 3 zur Erfüllung von Rundlauftoleranzen zentriert, kontaktiert das erste Rad 3 jedoch im Wesentlichen stirnseitig.

Das erste Radsatzlager 1 ist stirnseitig mit einer Radnabe 29 des ersten Rads 3 verbunden. Hierzu weist die Radnabe 29 eine erste Radbohrung 30, eine zweite Radbohrung 31 sowie in Fig. 2 nicht sichtbare weitere Radbohrungen auf, wobei es sich um als Sacklochbohrungen ausgebildete Radsatzkomponentenbohrungen handelt.

Die erste Radbohrung 30, die zweite Radbohrung 31 und die weiteren Radbohrungen sind exzentrisch bezüglich und parallel zu einer Radsatzlängsachse 13 angeordnet.

Durch die erste Lagerbohrung 14 und die dritte Lagerbohrung 16 hindurch sowie in der ersten Radbohrung 30 ist eine erste Schraube 20 geführt, durch die zweite Lagerbohrung 15 und die vierte Lagerbohrung 17 hindurch sowie in der zweiten Radbohrung 31 eine zweite Schraube 21 sowie durch die weiteren Lagerbohrungen hindurch und in den weiteren Radbohrungen in Fig. 2 nicht sichtbare weitere Schrauben.

Die erste Schraube 20, die zweite Schraube 21 und die weiteren Schrauben sind als Sechskantschrauben ausgeführt, deren Schraubenköpfe kontaktieren einen ersten Deckel 26, welcher mit einer Stirnseite des ersten Radsatzlagers 1 verbunden ist.

Mittels der ersten Schraube 20, der zweiten Schraube 21 und der weiteren Schrauben sind das erste Radsatzlager 1 und das erste Rad 3 miteinander verspannt.

Das zweite Radsatzlager 2 ist im Hinblick auf dessen Verbindungstechnik mit dem zweiten Rad 4 gleich wie das erste Radsatzlager 1 und das erste Rad 3 ausgebildet.

Zwischen dem ersten Rad 3 und dem zweiten Rad 4 ist eine Radsatzwelle 22 des Radsatzes angeordnet, welche mit dem ersten Rad 3 und dem zweiten Rad 4 verschraubt ist.

Das erste Radsatzlager 1 weist einen Innendurchmesser dᵢ auf, welcher kleiner ist als ein Außendurchmesser dₐ der Radsatzwelle 22.

Ein aus der Radsatzwelle 22, dem ersten Rad 3, dem zweiten Rad 4, dem ersten Radsatzlager 1 und dem zweiten Radsatzlager 2 gebildeter Innenraum ist mittels des ersten Deckels 26 und eines zweiten Deckels 27, welcher mit einer Stirnseite des zweiten Radsatzlagers 2 verbunden ist, dicht verschlossen. Ein Lagerinnenring 7 des ersten Radsatzlagers 1 und ein Innenring des zweiten Radsatzlagers 2 sind als hohle Radsatz-Endabschnitte ausgebildet.

Erfindungsgemäß ist es auch vorstellbar, dass das erste Radsatzlager 1 einen größeren Innendurchmesser dᵢ aufweist, wobei die erste Schraube 20, die zweite Schraube 21 und die weiteren Schrauben länger ausgeführt und über entsprechende stirnseitige und exzentrische Bohrungen in der Radsatzwelle 22 mit der Radsatzwelle 22 verbunden sind, wodurch auf eigene Befestigungsmittel zur Verbindung der Radsatzwelle 22 mit dem ersten Rad 3 verzichtet werden kann.

### Liste der Bezeichnungen

- 1: Erstes Radsatzlager
- 2: Zweites Radsatzlager
- 3: Erstes Rad
- 4: Zweites Rad
- 5: Erstes Lagerelement
- 6: Zweites Lagerelement
- 7: Lagerinnenring
- 8: Lageraußenring
- 9: Lagerkörperanordnung
- 10: Erster Wälzkörper
- 11: Zweiter Wälzkörper
- 12: Lagerlängsachse
- 13: Radsatzlängsachse
- 14: Erste Lagerbohrung
- 15: Zweite Lagerbohrung
- 16: Dritte Lagerbohrung
- 17: Vierte Lagerbohrung
- 18: Erste Bohrungslängsachse
- 19: Zweite Bohrungslängsachse
- 20: Erste Schraube
- 21: Zweite Schraube
- 22: Radsatzwelle
- 23: Erstes Radsatzwellenteil
- 24: Zweites Radsatzwellenteil
- 25: Drittes Radsatzwellenteil
- 26: Erster Deckel
- 27: Zweiter Deckel
- 28: Ansatz
- 29: Radnabe
- 30: Erste Radbohrung
- 31: Zweite Radbohrung
- 32: Erste Radsatzwellenbohrung
- 33: Zweite Radsatzwellenbohrung
- 34: Erstes Radsatzlagergehäuse
- 35: Zweites Radsatzlagergehäuse
- dᵢ: Innendurchmesser
- dₐ: Außendurchmesser

## Patentansprüche

1. Radsatzlager für Fahrzeuge, insbesondere für Schienenfahrzeuge, mit zumindest einem Lagerinnenring, zumindest einem Lageraußenring, zumindest einer Lagerkörperanordnung und einer Lagerlängsachse, wobei die zumindest eine Lagerkörperanordnung dem zumindest einen Lagerinnenring und dem zumindest einen Lageraußenring zwischengeordnet ist, **dadurch gekennzeichnet, dass** der zumindest eine Lagerinnenring (7) stirnseitig zumindest eine bezüglich der Lagerlängsachse (12) exzentrische erste Lagerbohrung (14) aufweist, über welche ein erstes Rad (3) und eine Radsatzwelle (22) miteinander verbindbar sind.

2. Radsatzlager nach Anspruch 1, **dadurch gekennzeichnet, dass** eine erste Bohrungslängsachse (18) der zumindest ersten Lagerbohrung (14) parallel zu der Lagerlängsachse (12) angeordnet ist.

3. Radsatzlager nach Anspruch 1 oder 2, **dadurch gekennzeichnet, dass** die zumindest eine Lagerkörperanordnung (9) aus einer Mehrzahl an Wälzkörpern gebildet ist.

4. Radsatzlager nach einem der Ansprüche 1 bis 3, **dadurch gekennzeichnet, dass** der zumindest eine Lagerinnenring (7) als Radsatz-Hohlabschnitt ausgebildet ist.

5. Radsatz für Fahrzeuge, insbesondere für Schienenfahrzeuge, mit zumindest einem Radsatzlager nach einem der Ansprüche 1 bis 4, **dadurch gekennzeichnet, dass** das zumindest eine Radsatzlager mittels einer in zumindest einer ersten Lagerbohrung (14) geführten ersten Schraube (20) mit einer ersten Radsatzkomponente und einer zweiten Radsatzkomponente verbunden ist, wobei die erste Radsatzkomponente als erstes Rad (3) ausgebildet ist und die erste Schraube (20) in einer als erste Radbohrung (30) ausgebildeten, stirnseitigen ersten Radsatzkomponentenbohrung angeordnet ist, und wobei die zweite Radsatzkomponente als Radsatzwelle (22) ausgebildet ist und die erste Schraube (20) in einer als erste Radsatzwellenbohrung (32) ausgebildeten, stirnseitigen zweiten Radsatzkomponentenbohrung angeordnet ist, wobei das erste Rad (3) und die Radsatzwelle (22) mittels der ersten Schraube (20), welche durch die zumindest erste Lagerbohrung (14) hindurchgeführt ist, miteinander verbunden sind.

6. Radsatz nach Anspruch 5, **dadurch gekennzeichnet, dass** das zumindest eine Radsatzlager und zumindest die erste Radsatzkomponente einander im Wesentlichen stirnseitig kontaktierend angeordnet sind.

7. Radsatz nach Anspruch 5 oder 6, **dadurch gekennzeichnet, dass** ein Innendurchmesser (dᵢ) des zumindest einen Radsatzlagers kleiner ist als ein Außendurchmesser (dₐ) der Radsatzwelle (22).

8. Radsatz nach einem der Ansprüche 5 bis 7, **dadurch gekennzeichnet, dass** das zumindest eine Radsatzlager dem ersten Rad (3) und der Radsatzwelle (22) zwischengeordnet ist.

9. Radsatz nach einem der Ansprüche 5 bis 7, **dadurch gekennzeichnet, dass** das zumindest eine Radsatzlager außerhalb eines von dem ersten Rad (3) und einem zweiten Rad (4) eingegrenzten Bereichs angeordnet ist.

10. Radsatz nach einem der Ansprüche 5 bis 9, **dadurch gekennzeichnet, dass** die Radsatzwelle (22) als Hohlwelle oder als Rohr ausgebildet ist oder zumindest einen Hohlraum aufweist.

11. Radsatz nach einem der Ansprüche 5 bis 10, **dadurch gekennzeichnet, dass** die Radsatzwelle (22) eine Mehrzahl an Radsatzwellenteilen aufweist.

12. Radsatz nach Anspruch 10 oder 11, **dadurch gekennzeichnet, dass** die Radsatzwelle (22) oder zumindest ein erstes Radsatzwellenteil (23) an zumindest einem Ende verstärkt ausgeführt ist.

13. Fahrwerk für Fahrzeuge, insbesondere für Schienenfahrzeuge, mit zumindest einem Radsatz nach einem der Ansprüche 5 bis 12.
